# FASCICULE DE BREVET EUROPEEN

(11) **EP 1 185 820 B1**
(45) Date de publication et mention de la délivrance du brevet: **18.04.2007**
(21) Numéro de dépôt: 01927979.3
(22) Date de dépôt: 17.04.2001
(51) Int. Cl.: F16P 3/08, A47J 42/56

(54) **DISPOSITIF DE SECURITE MECANIQUE POUR APPAREIL DE TRAITEMENT DES ALIMENTS**
MECHANISCHE SICHERHEITSVORRICHTUNG FÜR EIN GERÄT ZUR BEHANDLUNG VON NAHRUNGSMITTELN
MECHANICAL SAFETY DEVICE FOR FOOD PROCESSING APPLIANCE

(30) Priorité: 18.04.2000 FR 0004966
(43) Date de publication de la demande: 13.03.2002
(73) Titulaire: Robot-Coupe, 94300 Vincennes (FR)
(72) Inventeur: FEVRE, Loic, F-71410 Sanvignes-les-Mines (FR); GATEAUD, André, F-71300 Montceau-les-Mines (FR); PERRIN, Pierre, F-71410 Sanvignes-les-Mines (FR)
(74) Mandataire: Schmit, Christian Norbert Marie
(86) Numéro de dépôt international: PCT/FR2001/001174
(87) Numéro de publication internationale: WO 2001/079746

(56) Documents cités:
- FR-A- 2 147 361
- US-A- 4 674 690
- US-A- 4 821 968

## Description

La présente invention a pour objet un dispositif de sécurité destiné en particulier, mais non exclusivement, aux appareils de coupe des aliments.

Ces appareils bien connus dans le domaine, appelés coupe-légumes ou combinés cutter/coupe-légumes, comprennent, entre autres, un bloc moteur permettant la commande et la motorisation de l'outil de coupe et un dispositif, communément appelé tête coupe-légumes, permettant l'alimentation et la coupe des produits. La tête coupe-légumes est composée d'une cuve, amovible ou partie intégrante du bloc moteur, de forme appropriée, permettant ou non l'évacuation en continu des produits traités (cuve fermée ou cuve ouverte), d'un disque ou outil de coupe situé à l'intérieur de la cuve qui, mû par le moteur, réalise la coupe désirée (éminçage, râpage, etc.), d'un couvercle et selon les cas d'un disque évacuateur.

Le couvercle permet l'introduction des produits à traiter en les guidant à travers un ou plusieurs tubes verticaux ou goulottes. Il assure également une fonction de protection de l'utilisateur en évitant les projections de produit traité à l'extérieur de la cuve et surtout en évitant que l'utilisateur puisse toucher le disque en mouvement.

L'introduction des aliments dans la machine s'effectue en les plaçant dans la goulotte appropriée et en les poussant contre le disque à l'aide d'un poussoir. En fonctionnement, le retrait du poussoir laisse le disque apparent à travers la goulotte. Pour les goulottes de grandes dimensions, il est souhaitable, si l'on veut protéger l'utilisateur des risques de blessures, d'asservir le fonctionnement du moteur à la présence d'un élément physique obturant l'entrée de la goulotte.

Il est connu par FR-A-2 147 361 (VERDUN) de réaliser une sécurité mécanique de présence du couvercle sur la cuve, cette sécurité étant obtenue par une tige coulissante disposée selon une génératrice de la cuve dont la partie inférieure vient porter, lorsque le couvercle est en place, contre un interrupteur inclus dans le socle sous l'action d'une came portée par le couvercle. Mais ce dispositif ne permet pas d'assurer une sécurité de goulotte ce qui conduit à des goulottes de grande hauteur et/ou de section limitée.

Un dispositif réalisant cette fonction d'asservissement entre le poussoir et la commande du moteur par voie magnétique est connu par US-A-4 821 968 et utilise des aimants et des interrupteurs à la lame souple ou de type à effet Hall. Ce dispositif nécessite une transformation du courant électrique et, par ailleurs, la commande par champ magnétique est plus délicate à mettre au point pour la prise en considération des exigences des normes de sécurité.

Des dispositifs mécaniques sont également connus qui consistent à actionner un rupteur lorsque la position de fonctionnement sans risque du poussoir de goulotte est atteinte. Un tel dispositif est décrit dans US-A-4 674 690 dans lequel la goulotte est entourée par un manchon, muni de moyens d'actionnement du rupteur, dans lequel le poussoir est monté prisonnier.

L'objet de l'invention est de pallier l'ensemble de ces problèmes et d'apporter une solution à l'asservissement entre le poussoir de pression sur les produits insérés dans la goulotte et la commande du moteur. Cette solution mécanique permet l'emploi d'une goulotte de grande section.

Selon l'invention, un appareil de préparation des aliments à outil tournant comprend les caractéristiques de la revendication 1.

Le dispositif de sécurité mécanique pour un appareil de traitement des aliments qui nécessite ou non une action de l'opérateur sur les produits durant leur coupe, comprenant un bloc moteur sur lequel est montée, de manière amovible ou non, une cuve fermée par un couvercle lui-même amovible ou non par rapport à la cuve, réalise l'asservissement du moteur à la position d'une ou plusieurs pièces mobiles qui interdit l'accès à la zone à risque. En l'occurrence, une pièce mobile pivotante est constituée par un guide-poussoir, le poussoir, coulissant à l'intérieur du guide-poussoir permettant ou non le pivotement de celui-ci. L'obturation nécessaire de la partie supérieure de la goulotte peut être réalisée, soit par le poussoir proprement dit, soit par le guide de poussoir. Le poussoir est généralement constitué par un manche de section réduite à l'extrémité inférieure duquel est formé un plateau dont la section est sensiblement égale à celle de la goulotte. Bien entendu, le manche de poussoir coulisse librement dans le guide-poussoir. Le plateau du poussoir ne peut être extrait de la goulotte que lorsqu'il est amené au-dessus de celle-ci par une traction sur le manche.

Le pivotement du guide-poussoir provoque la translation d'une tige de couvercle dont l'extrémité inférieure porte contre la partie supérieure de la tige de sécurité de la cuve, le pivotement ne peut être effectué que lorsque le plateau du poussoir est amené en butée contre le guide-poussoir.

On réalise ainsi l'asservissement de la commande d'un moteur à la position d'une pièce mobile obturant l'accès à la zone à risque constituée par l'ouverture d'une goulotte de grande section.

Selon une autre caractéristique de l'invention, le guide-poussoir entraîne une bielle par une première articulation, laquelle bielle forçant par l'articulation de sa deuxième extrémité la rotation d'un vilebrequin autour d'un second axe fixe par rapport au couvercle, ledit vilebrequin entraînant à son tour, par sa première articulation commune avec ladite bielle une première tige qui agit sur l'interrupteur situé dans le bloc moteur par l'intermédiaire de la seconde tige, guidée en translation dans la paroi de la cuve, ladite seconde tige étant rappelée vers le haut par ressort.

Les dispositifs mécaniques sont économiques car ils peuvent agir directement sur un interrupteur électrique qui supporte des courants compatibles avec ceux des moteurs employés. Ainsi, l'appareil reste très simple et fiable et son coût de fabrication plus modéré que celui des autres sécurités.

Le poussoir est lié au couvercle d'un coupe-légumes par une pièce intermédiaire appelée guide-poussoir. Le guide-poussoir pivote autour d'un axe horizontal positionné à la partie supérieure de la goulotte et permet la translation du poussoir. Ainsi, lorsque le poussoir est dans la goulotte, l'introduction des produits à traiter s'effectue en tirant le poussoir vers le haut jusqu'au niveau supérieur de la goulotte puis en faisant pivoter le guide-poussoir afin de dégager l'entrée de la goulotte. Une fois la goulotte remplie, la pression exercée sur les produits s'effectue en faisant pivoter le guide-poussoir de telle sorte que le poussoir se trouve au niveau supérieur de la goulotte puis en faisant descendre le poussoir verticalement à l'intérieur de la goulotte. Une remontée du poussoir, puis un dégagement de celui-ci permettent de remplir à nouveau la goulotte. Une fermeture du guide et une descente du poussoir permet de pousser le produit contre un outil tel qu'un disque de coupe.

L'asservissement du fonctionnement du moteur à la position du guide-poussoir permet d'assurer que le moteur ne fonctionne que lorsque le poussoir obture suffisamment l'entrée de la goulotte. Un ensemble de tiges, disposées entre le couvercle et le guide-poussoir, commande, suivant la position du guide-poussoir, un interrupteur de sécurité implanté au voisinage du moteur. La transmission du mouvement de translation qui actionne l'interrupteur est assurée par la tige de sécurité placée dans la cuve du coupe-légumes du type décrit dans le brevet français précité. Un ressort de rappel est utilisé pour ramener la tige en position haute lorsque le guide-poussoir n'est pas en position de travail.

La cinématique de l'invention résout deux difficultés conjointes liées à ce type de système :

Lorsque le guide-poussoir est fermé, le système doit exercer une force de résistance à l'ouverture, juste suffisante pour permettre de relever le poussoir sans entraîner le guide-poussoir avant que le poussoir soit complètement relevé. Ceci est indispensable car, dans le cas contraire, le basculement prématuré du guide-poussoir produit un frottement du poussoir dans la goulotte, a minima nuisible à l'ergonomie, et pouvant conduire au blocage complet du mécanisme par arc-boutement. Dans le même temps, la force de résistance à l'ouverture ne doit pas être excessivement élevée car serait alors une gêne pour l'utilisateur.

Le système doit également provoquer l'arrêt du moteur alors même que le guide-poussoir est très peu basculé, c'est-à-dire bien avant que l'accès de la main à l'outil soit possible. Pour cela, il est nécessaire que le mécanisme produise une course relativement importante de la tige contenue dans le couvercle pour un faible débattement angulaire du guide-poussoir.

Un faible pivotement du guide-poussoir vers le haut de la goulotte à partir de sa position la plus basse entraîne l'arrêt du moteur. Lors de la descente du poussoir à l'intérieur de la goulotte il est possible de lancer le moteur en autorisant un certain dépassement des produits à traiter au-dessus du niveau supérieur de la goulotte protégée.

D'autres caractéristiques et avantages de l'invention apparaîtront au cours de la description qui va suivre d'un mode particulier de réalisation, donné uniquement à titre d'exemple non limitatif, en regard des dessins qui représentent :
- la figure 1, une vue en perspective d'une machine complète ;
- la figure 2, une vue en perspective et en demi-coupe rapprochée ;
- la figure 3, un schéma de principe du dispositif mécanique qui assure selon l'invention, l'action du poussoir sur la tige de la cuve, dans l'état où le poussoir est complètement descendu ;
- la figure 4, un dessin en coupe du mécanisme dans la situation décrite à la figure 3 ;
- la figure 5, un schéma de principe avec le poussoir en cours de remontée à l'instant où le dispositif provoque l'arrêt du moteur ;
- la figure 6, un dessin en coupe du mécanisme dans la situation décrite à la figure 5 ;
- la figure 7, un schéma de principe avec le poussoir complètement ouvert ;
- la figure 8, un dessin en coupe du mécanisme dans la situation décrite à la figure 7.

Sur l'ensemble des figures, les mêmes références désignent les mêmes éléments.

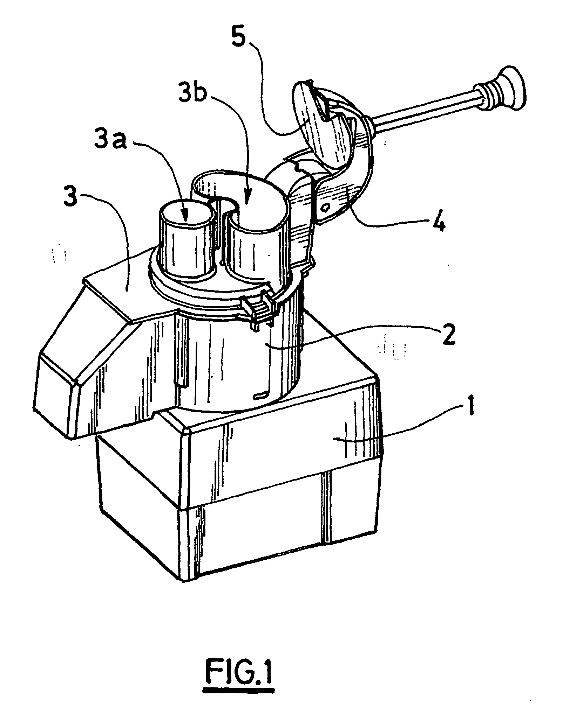

La figure 1 montre l'ensemble de la machine, le mécanisme nécessaire à la cinématique étant protégé des salissures par un ensemble de capots appropriés.

Sur la figure 1, le socle 1 renfermant le moteur (non représenté) sert de support à la cuve 2, fermée par le couvercle 3, qui comprend une petite goulotte 3a, et une grande goulotte 3b, à l'intérieur de laquelle peut pénétrer un poussoir 5 coulissant dans un guide 4.

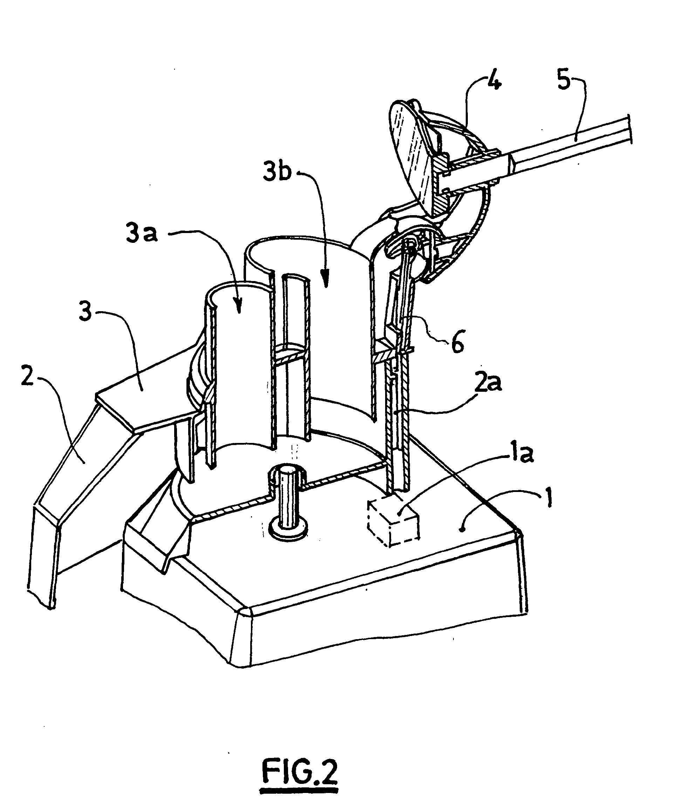

La figure 2 montre grâce à la coupe de la tête coupe-légumes, la petite goulotte 3a qui ne nécessite pas de dispositif de sécurité et la grande goulotte 3b dont l'utilisation est protégée par le système de sécurité selon l'invention. La tête est représentée dans la position de remplissage de la grande goulotte. Sur la figure 2, un interrupteur de sécurité la est disposé à l'intérieur du socle 1, au-dessous d'une tige de sécurité 2a montée coulissante selon une génératrice de la cuve 2 et sur laquelle agit la tige 6 du couvercle 3.

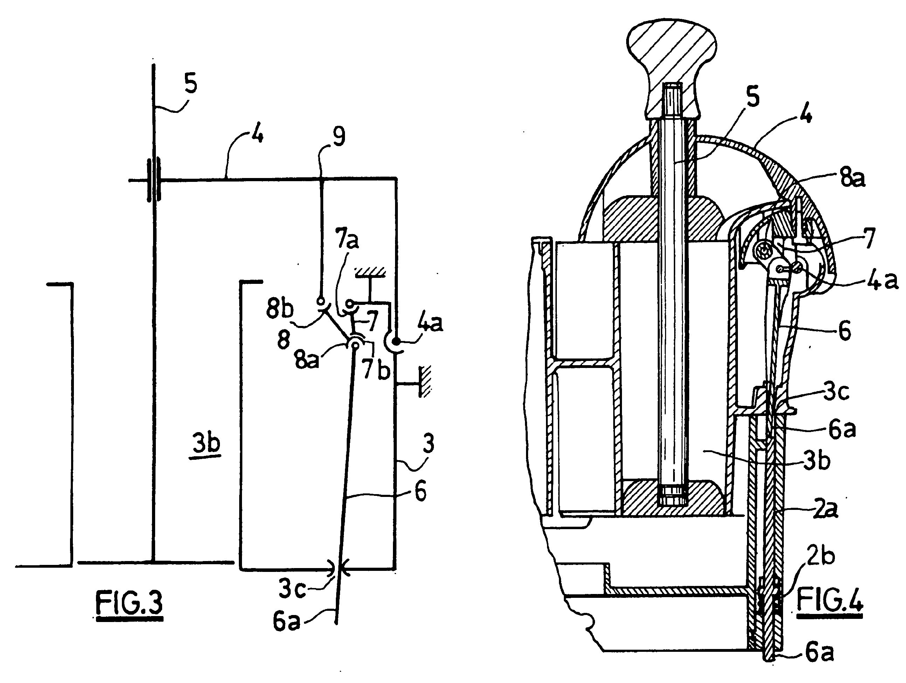

Les figures 3 à 8 sont des schémas et dessins permettant d'expliquer le fonctionnement du mécanisme destiné à transformer le mouvement de pivotement du guide-poussoir en un mouvement de translation verticale de la tige montée dans la paroi de la cuve, lors du pivotement du guide-poussoir, après avoir amené le poussoir au niveau supérieur de la goulotte.

Le guide-poussoir 4 est articulé autour d'un axe 4a fixe par rapport au couvercle 3. Le guide-poussoir 4 porte également un axe 8b sur lequel est articulée la bielle 8. La seconde extrémité 8a de la bielle 8 est articulée sur une extrémité 7b d'un vilebrequin 7 dont la seconde extrémité 7a est articulée en un point fixe 7a du couvercle 3. Sur l'extrémité 7b est également articulée une extrémité de la tige 6 dont la seconde extrémité est guidée dans une ouverture 3c du couvercle et vient porter sur la tige de sécurité 2a montée coulissante dans la cuve.

Le pivotement du guide-poussoir 4 déplace l'axe 8b, l'axe 7a étant fixe et les distances entre d'une part, 7a et 7b et d'autre part, 7b et 8b, étant constantes, le point 7b décrit alors un arc de cercle autour de 7a. L'extrémité supérieure de la tige 6, fixée en 7b, suit le même mouvement. Elle est par ailleurs guidée en translation par l'ouverture 3c pratiquée dans le couvercle, ce qui a pour effet de déplacer verticalement l'extrémité inférieure 6a de cette tige. Le ressort 2b assurant le contact entre la partie supérieure de la tige 2a et la face inférieure de la tige 6, la tige de sécurité de cuve 2a se déplace verticalement de la même manière, jusqu'à la fin du débattement du guide-poussoir 4 dans une direction ou dans l'autre.

Sur les figures 3 et 4, le guide-poussoir est fermé et le poussoir est complètement descendu dans la goulotte 3b. Les figures 3 et 4 montrent la position de l'ensemble lorsque l'opérateur a poussé les produits à travers la goulotte 3b. Le poussoir 5 est dans sa position inférieure et la tige 6 appuie sur le haut de la tige de sécurité 2a qui elle-même ferme l'interrupteur 1a. Pour retourner à la position d'ouverture, il est nécessaire de remonter le poussoir 5, puis de faire pivoter le guide-poussoir 4 dans le sens horaire.

Le schéma de la figure 3 montre comment le dispositif exerce sur le guide-poussoir la force de résistance à l'ouverture, décrite précédemment. Ceci est obtenu par le fait que le vilebrequin 7, qui a tourné légèrement au-delà de la position verticale, dans le mouvement de fermeture de guide-poussoir, exerce par son axe 7b, une traction sur la bielle 8 qui a son tour tend à maintenir fermé le guide-poussoir 4 par la liaison 8b, ceci sous l'action du ressort 2b transmise à la tige 6 par la tige 2a.

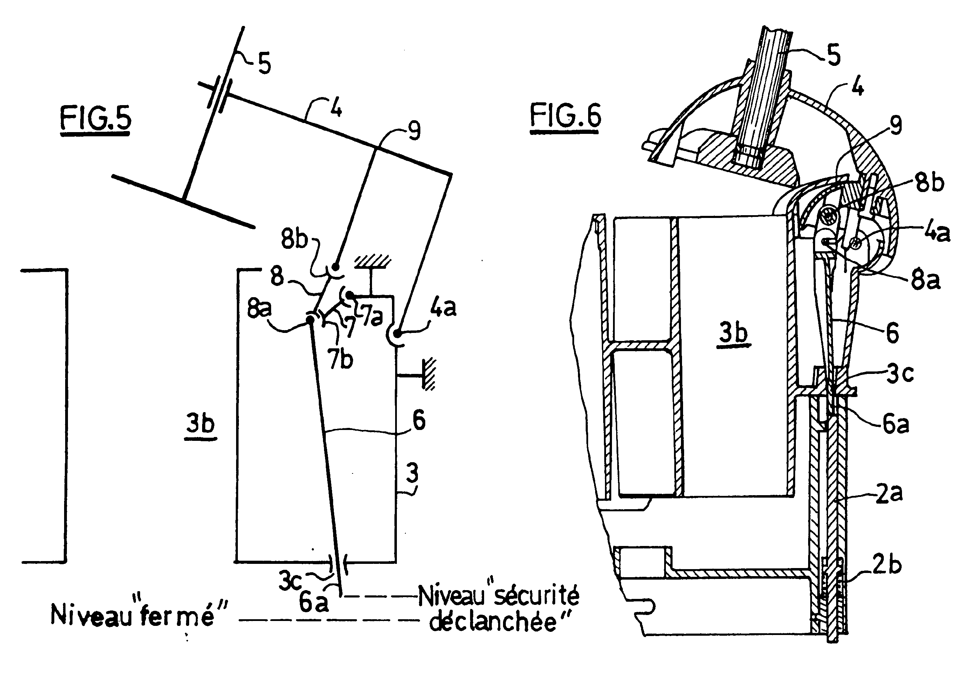

Sur les figures 5 et 6, le poussoir 5 a été remonté au maximum dans la goulotte 3b puis le guide-poussoir 4 a pivoté dans une position intermédiaire dans le sens horaire. Cette position est celle du système au déclenchement de l'interrupteur de sécurité la et met en évidence que l'accès de la main à l'outil est empêché alors que l'ordre d'arrêt du moteur est donné.

Les figures 5 et 6 précisent la position du système au moment où la tige 6 est suffisamment remontée pour que la tige 2a libère l'interrupteur la, ce qui conduit à l'arrêt du moteur. Dans le mouvement opposé de fermeture du poussoir, c'est aussi pratiquement la position à partir de laquelle il est possible de redémarrer le moteur. Cette caractéristique du dispositif permet de remplir à 100 % le volume de la goulotte 3b avec les produits à traiter et maximise ainsi les performances de l'appareil.

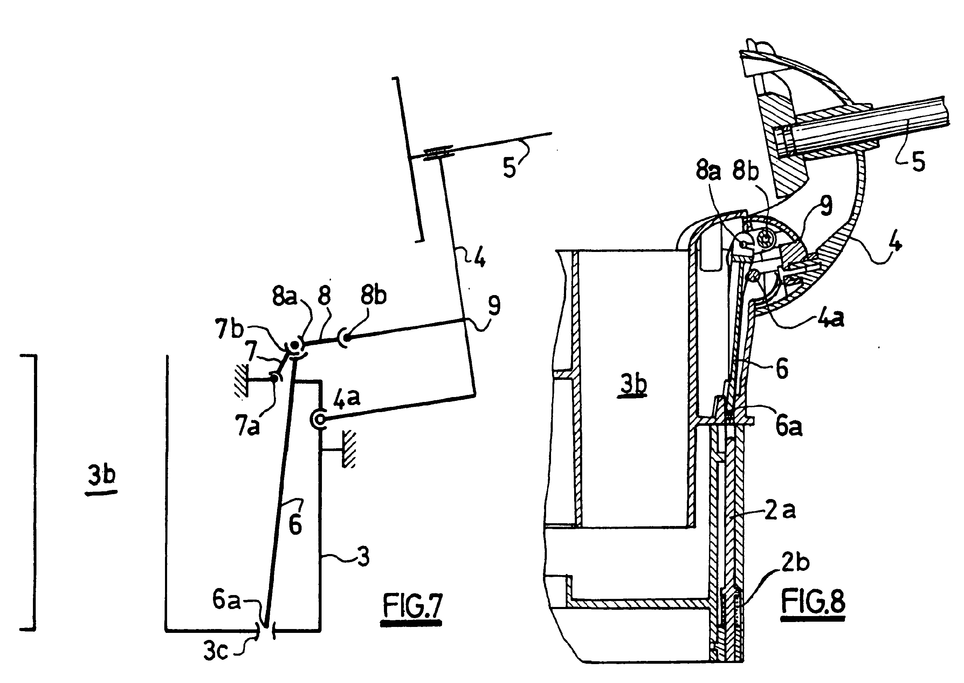

Les figures 7 et 8 représentent le dispositif dans sa position complètement ouverte avec le poussoir complètement relevé mettant à évidence l'accès direct à toute la surface de la goulotte.

Sur les figures 7 et 8, le guide-poussoir 4 a continué sa rotation en sens horaire pour atteindre sa position d'ouverture maximale qui permet au poussoir 5 de dégager complètement l'ouverture de la goulotte 3b afin de pouvoir la remplir très facilement à nouveau avec les produits à traiter.

Le guide-poussoir étant articulé sur un axe 42 le contact de la tige 2a sur l'interrupteur 1a est établi lorsque la surface inférieure du guide-poussoir 4 forme un angle d'environ 10° avec l'horizontale dans le sens horaire et est interrompu lorsque la surface inférieure du guide-poussoir forme un angle d'environ 11° dans le sens anti-horaire. C'est-à-dire qu'un faible pivotement du guide poussoir interrompt le contact entre la tige 2a et l'interrupteur la ce qui arrête le moteur qui n'est plus alimenté en énergie électrique. Dans le sens de l'obturation de la goulotte, une fermeture légèrement prématurée permet d'opérer lorsque les aliments, par exemple des légumes de forme irrégulière dépassent le niveau de l'entrée de la goulotte. Celle-ci peut ainsi être chargée à sa capacité maximale.

Un avantage significatif du système de sécurité selon l'invention est la possibilité d'utiliser une goulotte cylindrique ou présentant une autre forme de surface égale à celle du poussoir et de hauteur égale à la course du poussoir. Le volume travaillé est ainsi optimal.

Un autre avantage de la cinématique retenue est l'utilisation en toute sécurité d'une goulotte dont les produits peuvent dépasser légèrement ce qui évite de calibrer les produits, augmentant ainsi considérablement la facilité d'emploi. La simplicité de la mécanique qui compose ce système de sécurité, par rapport à l'art antérieur, permet de mettre en évidence, en plus des avantages déjà cités, une fiabilité accrue.

Il va de soi que de nombreuses variantes peuvent être apportées, notamment par substitution de moyens techniques équivalents, sans sortir pour cela du cadre des revendications.

## Revendications

1. - Appareil de traitement d'aliments à outil tournant entraîné, par un moteur électrique logé dans un socle (1) sur lequel est monté une cuve (2) fermée par un couvercle (3) et à l'intérieur de laquelle passe l'arbre moteur pouvant recevoir différents outils, le couvercle (3) comprenant une goulotte (3b) d'introduction des aliments, l'appareil comprenant une sécurité mécanique à tige de sécurité (2a) portant sur un interrupteur inclus dans le socle (1a) disposé dans le circuit d'alimentation du moteur électrique, **caractérisé en ce qu'**un poussoir (5) est guidé en translation dans la goulotte (3b) par un guide-poussoir articulé en haut de la goulotte (3b) et mécaniquement relié à des moyens pour actionner la tige de sécurité (2a), le mécanisme entraînant l'arrêt du moteur électrique pour un faible débattement angulaire du guide-poussoir (4) dans le sens de pivotement de ce dernier à la position ouverte permettant l'introduction des aliments dans la goulotte (3b).

2. - Appareil de traitement d'aliments selon la revendication 1, **caractérisé en ce que** la goulotte (3b) a une forme générale cylindrique, et le poussoir définit une surface sensiblement égale à la section de la goulotte (3b).

3. - Appareil de traitement d'aliments selon l'une des revendications 1 ou 2, **caractérisé en ce que** le guide-poussoir (4) entraîne une bielle (8) par une articulation (8b), laquelle bielle (8) forçant par l'articulation (8a) de sa deuxième extrémité la rotation d'un vilebrequin (7) autour d'un axe (7a) fixe par rapport au couvercle (3), ledit vilebrequin entraînant à son tour, par son articulation (8a) commune avec la bielle (8), une tige (6) qui agit sur l'interrupteur (1a) dans le socle (1) du moteur électrique, par l'intermédiaire de la tige (2a), guidée en translation dans la paroi de la cuve (2) suivant une génératrice de cette dernière, la tige étant rappelée vers le haut par un ressort (2b).

4. - Appareil de traitement d'aliments selon l'une des revendications précédentes, **caractérisé en ce que**, lors de la fermeture du guide-poussoir (4) sur la goulotte (3b), le moteur électrique est lancé lorsque l'angle d'inclinaison est de quelques degrés avant que celui-ci prenne sa position horizontale, en autorisant un dépassement des produits à traiter au-dessus du niveau supérieur de la goulotte (3b) protégée.

5. - Appareil de traitement d'aliments selon l'une des revendications précédentes, **caractérisé en ce qu'**il comporte des moyens (6, 7, 2b) pour exercer une force de résistance à l'ouverture du guide poussoir (4) lorsque l'on relève le poussoir.

6. - Appareil de traitement d'aliments selon l'une des revendications précédentes, **caractérisé en ce que** le guide-poussoir est articulé sur un axe (4a), le contact de la tige (2a) sur l'interrupteur (1a) est établi lorsque la surface inférieure du guide-poussoir (4) forme un angle d'environ 10° par rapport à une position fermée et est interrompu lorsque la surface inférieure du guide-poussoir forme un angle d'environ 11°.

## Claims

1. A food processing appliance with a rotating tool driven by an electrical motor housed in a base (1) on which is mounted a bowl (2) closed by a lid (3) and inside of which passes the driving shaft that may receive various tools, the lid (3) comprising a tube (3b) for introducing food, the appliance comprising a security rod (2a) mechanical safety feature supported on a switch included in the base (1a) disposed in the power circuit of the electrical motor, **characterized in that** plunger (5) is guided in translation in the tube (3b) by a plunger guide articulated at the top of the tube (3b) and mechanically connected to means to activate the security rod (2a), the mechanism causing the electrical motor to stop at the open position upon a small angular clearance of the plunger guide (4) in the direction of pivoting of the plunger guide, allowing food to be introduced into the tube (3b).

2. The food processing appliance according to claim 1, **characterized in that** the tube (3b) has a generally cylindrical form and the plunger defines a surface that is substantially equal to the cross section of the tube (3b).

3. The food processing appliance according to one of claims 1 or 2, **characterized in that** the plunger guide (4) drives a connecting rod (8) by an articulation (8b), which connecting rod (8) forces by the articulation (8a) of its second extremity the rotation of a crankshaft (7) around a pin (7a) that is fixed with relation to the lid (3), said crankshaft driving in turn, by its articulation (8a) common with the connecting rod (8), a rod (6) that acts on the switch (1a) in the base (1) of the electrical motor, through the rod (2a), guided in translation in the wall of the bowl (2) along its generator, the rod being returned upward by a spring (2b).

4. A food processing appliance according to one of the previous claims, **characterized in that**, when the plunger guide (4) is closed on tube (3b), the electrical motor starts when the angle of inclination is several degrees before the plunger guide takes its horizontal position, by enabling the products to be processed to protrude above an upper level of the protected tube (3b).

5. The food processing appliance according to one of the previous claims, **characterized in that** the appliance comprises means (6, 7, 2b) for exerting a resisting force to the opening of the plunger guide (4) when the plunger is raised.

6. The food processing appliance according to one of the previous claims, **characterized in that** the plunger guide is articulated on a pin (4a), contact of the rod (2a) on the switch (1a) is established when the lower surface of the plunger guide (4) forms an angle of approximately 10° with relation to a closed position and is interrupted when the lower surface of the plunger guide forms an angle of approximately 11°.

## Patentansprüche

1. Vorrichtung zur Bearbeitung von Nahrungsmitteln mit einem Drehgerät, das von einem Elektromotor angetrieben wird, der in einem Sockel (1) angeordnet ist, auf dem eine durch einen Deckel (3) geschlossene Wanne (2) montiert ist, in der die Motorwelle verläuft, die verschiedene Geräte aufnehmen kann, wobei der Deckel (3) eine Einführrinne (3b) für die Nahrungsmittel umfasst, wobei die Vorrichtung eine mechanische Sicherung mit Sicherungsstange (2a) umfasst, die mit einem Schalter verbunden ist, der in den Sockel (1a) integriert ist, der in der Versorgungsschaltung des Elektromotors angeordnet ist, **dadurch gekennzeichnet, dass** ein Schieber (5) in der Rinne (3b) durch eine oben an der Rinne (3b) angelenkte Schieberführung verschoben wird, die elektrisch mit Mittel verbunden ist, um die Sicherungsstange (2a) zu betätigen, wobei der Mechanismus das Anhalten des Elektromotors bei einem geringen Winkelausschlag der Schieberführung (4) in Schwenkrichtung dieser letztgenannten in die offene Position, die die Einführung der Nahrungsmittel in die Rinne (3b) ermöglicht, bewirkt.

2. Vorrichtung zur Bearbeitung von Nahrungsmitteln nach Anspruch 1, **dadurch gekennzeichnet, dass** die Rinne (3b) eine allgemeine zylindrische Form hat, und dass der Schieber eine im Wesentlichen mit dem Querschnitt der Rinne (3b) gleiche Fläche definiert.

3. Vorrichtung zur Bearbeitung von Nahrungsmitteln nach einem der Ansprüche 1 oder 2, **dadurch gekennzeichnet, dass** die Schieberführung (4) eine Stange (8) durch ein Gelenk (8b) antreibt, wobei die Stange (8) durch das Gelenk (8a) ihres zweiten Endes die Drehung einer Kurbelwelle (7) um eine zum Deckel (3) fest Achse (7a) hervorruft, wobei die Kurbelwelle ihrerseits mit ihrem gemeinsamen Gelenk (8a) mit der Stange (8) eine Stange (6) antreibt, die auf den Schalter (1a) im Sockel (1) des Elektromotors über die Stange (2a) einwirkt, die in der Wand der Wanne (2) entlang einer Mantellinie dieser letztgenannten verschoben wird, wobei die Stange durch eine Feder (2b) nach oben rückgestellt wird.

4. Vorrichtung zur Bearbeitung von Nahrungsmitteln nach einem der vorhergehenden Ansprüche, **dadurch gekennzeichnet, dass** beim Schließen der Schieberführung (4) auf der Rinne (3b) der Elektromotor gestartet wird, wenn der Neigungswinkel einige Grad vor der Einnahme seiner Horizontalposition ist, wobei ein Überragen der zu bearbeitenden Produkte über das obere Niveau der geschützten Rinne (3b) gestattet wird.

5. Vorrichtung zur Bearbeitung von Nahrungsmitteln nach einem der vorhergehenden Ansprüche, **dadurch gekennzeichnet, dass** sie Mittel (6, 7, 2b) umfasst, um eine Widerstandskraft gegen das Öffnen der Schieberführung (4), wenn der Schieber hochgehoben ist, auszuüben.

6. Vorrichtung zur Bearbeitung von Nahrungsmitteln nach einem der vorhergehenden Ansprüche, **dadurch gekennzeichnet, dass** die Schieberführung auf einer Achse (4a) angelenkt, der Kontakt der Stange (2a) auf dem Schalter (1a) hergestellt wird, wenn die Unterseite der Schieberführung (4) einen Winkel von ungefähr 10 ° zu einer geschlossenen Position bildet, und unterbrochen wird, wenn die Unterseite der Schieberführung einen Winkel von ungefähr 11° bildet.
